# EUROPEAN PATENT APPLICATION

(11) **EP 4 723 045 A1**
(43) Date of publication of application: **08.04.2026**
(21) Application number: 24818689.2
(22) Date of filing: 05.06.2024
(51) Int. Cl.: G06T 15/00, G06T 17/00

(54) **METHOD FOR RENDERING THREE-DIMENSIONAL CONTENT IN MULTI-TASK SYSTEM, AND DEVICE**

(30) Priority: 05.06.2023 CN 202310659805
(71) Applicant: Beijing Irisview Technology Co., Ltd., Beijing 100083 (CN)
(72) Inventor: FAN, Shunhao, Beijing 100083 (CN); YUE, Yating, Beijing 100083 (CN); HONG, Xinyan, Beijing 100083 (CN); ZHANG, Haiyue, Beijing 100083 (CN)
(74) Representative: IP TRUST SERVICES
(86) International application number: PCT/CN2024/097564
(87) International publication number: WO 2024/251157

(57) **Abstract**

The present disclosure relates to the technical field of computer systems, computer graphics, and human-computer interactions, and particularly to a method for rendering three-dimensional content in a multitasking system, and a device. An application is responsible for processing an application logic, generating a rendering instruction for a rendering object, and sending the rendering instruction to a system, such that the system renders the rendering object according to the rendering instruction. The method can reduce the pressure of data transmission between the application and the system, reduce the transmission delay, and save the rendering resources, thereby improving the display quality and the user experience of an XR system, and reducing the power consumption of an XR device.

## Description

### RELATED APPLICATION

The present disclosure claims priority to Chinese Patent Application No. 202310659805.6, entitled "method and apparatus for rendering three-dimensional content in multitasking system, and device", and filed on June 5, 2023, which is hereby incorporated by reference in its entirety.

### TECHNICAL FIELD

Embodiments of the present disclosure relate to the technical field of computer systems, computer graphics and human-computer interactions, and particularly to a method for rendering three-dimensional content in a multitasking system, and a device.

### BACKGROUND

In a multi-tasking system such as an extended-reality (XR) system, multiple tasks (i.e., multiple processes) are supported to run concurrently. Each process independently handles logical processing and rendering of an object, and sends an image generated from each frame of rendering to the system. A compositor built in the system composites the images sent by the multiple processes to form a final picture for display on a screen. In a two-dimensional (2D) multitasking system, this method can effectively distribute the rendering workload among the various processes. The system can achieve rendering optimization based on a planar occlusion relationship-for example, the areas occluded by other processes are not rendered, and only the visible areas are rendered and transmitted-thereby saving rendering resources and reducing the transmission bandwidth pressure. However, when both the processes and the system involve three-dimensional (3D) scenarios (e.g., a 3D multi-task effect achieved in XR glasses), the content of each process corresponds to an individual 3D scenario, and the final scenario composited by the system is also three-dimensional. In an XR 3D environment, the picture presented to a user requires a high resolution. Each process is required to render a rendering object according to the user's resolution requirements, and generate and send a high-resolution image to the system, which imposes an enormous transmission bandwidth, increases the transmission latency, and wastes part of the rendering resources. The high transmission bandwidth pressure and the transmission latency reduce the display quality and the user experience of the XR system, while increasing the power consumption of an XR device.

Therefore, a method for rendering 3D content in a multitasking system is urgently needed to solve the problems of large transmission bandwidth pressure, high transmission latency, and insufficient rendering resources between an application and a system in existing 3D multi-task rendering technologies.

### SUMMARY

In order to solve the problems in the prior art, embodiments of the present disclosure provide a method for rendering a three-dimensional (3D) content in a multitasking system, and a device. An application is responsible for generating a rendering instruction for a rendering object based on application logic, and sending the rendering instruction to a system, such that the system renders the rendering object according to the rendering instruction. The method can reduce decrease the pressure of data transmission between the application and the system, reduce the transmission delay, and improve the binocular picture quality and the user experience of an extended-reality (XR) system.

The specific technical solutions of the embodiments of the present disclosure are provided as follows.

Embodiments of the present disclosure provide a method for rendering three-dimensional (3D) content in a multitasking system. The method is applied to the multitasking system of a 3D content display supporting device and performed by an application in the multitasking system of the 3D content display supporting device. The method includes:
generating a rendering instruction for a rendering object based on application logic, the rendering instruction being used to guide the generation of a rendered image of the rendering object; and
sending the rendering instruction to a system, such that the system renders the rendering objects of a plurality of applications according to the received rendering instructions sent by the plurality of applications to obtain a rendered picture containing the rendering objects of the plurality of applications.

Based on the same inventive concept, embodiments of the present disclosure further provide a method for rendering three-dimensional (3D) content in a multitasking system. The method is applied to the multitasking system of a 3D content display supporting device and performed by a system in the multitasking system of the 3D content display supporting device. The method includes:
receiving rendering instructions for rendering objects sent by a plurality of applications, the rendering instructions being generated by the applications based on application logic to guide the generation of rendered images of the rendering objects;
obtaining view information of an operating user according to a 3D content display supporting device; and
rendering the rendering objects of the plurality of applications according to the rendering instructions and the view information of the operating user, to obtain a rendered picture containing the rendering objects of the plurality of applications.

In another aspect, embodiments of the present disclosure further provide a computer device, which includes a memory, a processor, and a computer program stored in the memory and executable on the processor. The processor is configured to execute the computer program to implement the afore-mentioned method.

According to the embodiments of the present disclosure, the applications in the multitasking system of the 3D content display supporting device generate the rendering instructions for the rendering objects based on the application logic and send the rendering instructions to the system. Compared with the conventional method in which the applications render the rendering objects and send the generated rendered images to the system, the size of the rendering instruction sent by the application in the present disclosure is much smaller than that of the generated rendered image, thereby effectively reducing the pressure of data transmission between the application and the system and reduce the transmission latency. Finally, the system renders the rendering objects of a plurality of applications according to the received rendering instructions sent by the plurality of applications and the view information of the operating user to obtain a rendered picture. The present disclosure keeps the application logic to be executed in the applications and enables the system to perform rendering. Even if a certain application crashes due to a logic processing failure, the operation of the system will not be affected, and the rendering objects of other normally operating applications can still be rendered properly, thereby improving the overall stability of the system.

### BRIEF DESCRIPTION OF THE DRAWINGS

For a clearer illustration of technical features in the embodiments of the present disclosure or the prior art, a brief description of the drawings for the embodiments or the prior art will be given below.
FIG. 1 illustrates a schematic diagram of an implementation system of a method for rendering 3D content in a multitasking system according to an embodiment of the present disclosure;
FIGS. 2 and 3 illustrate flowcharts of a method for rendering 3D content in a multitasking system according to an embodiment of the present disclosure;
FIG. 4 illustrates steps of generating a rendering instruction for a rendering object based on application logic according to an embodiment of the present disclosure;
FIG. 5 illustrates steps of rendering the rendering objects of a plurality of applications by a system according to received rendering instructions sent by the plurality of applications according to an embodiment of the present disclosure;
FIG. 6 illustrates steps of rendering the rendering objects of a plurality of applications by a system according to rendering instructions and view information of an operating user according to an embodiment of the present disclosure;
FIG. 7 illustrates a dataflow diagram of steps of generating a rendering instruction for a rendering object based on application logic, where metadata of the rendering object further includes incremental information, according to an embodiment of the present disclosure;
FIGS. 8 and 9 illustrate structural diagrams of an apparatus for rendering 3D content in a multitasking system according to an embodiment of the present disclosure;
FIG. 10 illustrates a structural diagram of a rendering system for rendering 3D content in a multitasking system;
FIG. 11 illustrates a structural diagram of a computer device according to an embodiment of the present disclosure;
FIG. 12 illustrates a schematic diagram of implementing an interaction between an operating user and a rendering object according to an embodiment of the present disclosure.

### [Reference numerals]

101: 3D content display supporting device;
102: application interaction module;
103: system composition module;
104: 3D interface display module;
801: rendering event receiving unit;
802: rendering instruction generation unit;
803: rendering instruction sending unit;
901: rendering instruction receiving unit;
902: view information obtaining unit;
903: rendering unit;
1001: system;
1002: application;
1102: computer device;
1104: processing device;
1106: storage resource;
1108: drive mechanism;
1110: input/output module;
1112: input device;
1114: output device;
1116: presentation device;
1118: graphical user interface;
1120: network interface;
1122: communication link;
1124: communication bus.

### DETAILED DESCRIPTION OF THE EMBODIMENTS

A clear and complete description of the technical features in the embodiments of the present disclosure will be set forth with reference to the drawings.

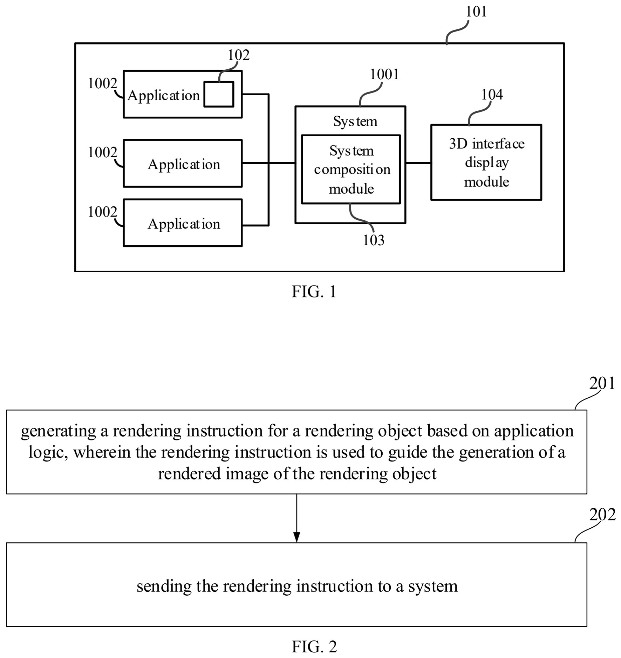

FIG. 1 illustrates a schematic diagram of an implementation system of a method for rendering three-dimensional (3D) content in a multitasking system according to an embodiment of the present disclosure. The method is applied to the multitasking system of a 3D content display supporting device 101. The 3D content display supporting device may be an extended-reality (XR) device, a 3D projection device, etc. The system 1001 may include a system composition module 103 and a plurality of application interaction modules 102. The application interaction module 102 of each application 1002 can interact with an operating user. The application in the application interaction module 102 can generate a rendering instruction for a rendering object based on application logic. Specifically, this involves parsing a triggered rendering event to obtain metadata of a rendering object, and performing system-adaptive conversion on the metadata of the rendering object to generate the rendering instruction for the rendering object. The application interaction module 102 and the system composition module 103 can communicate by means such as inter-process communication (IPC), and the application sends the rendering instruction to the system composition module 103. The system composition module 103 can obtain view information of the operating user, and render the rendering object according to the received rendering instruction and the view information of the operating user, to obtain a rendered picture containing the rendering objects of a plurality of applications. The rendered picture may be presented to the operating user through a 3D interface display module 104.

Subsequently, the operating user may also interact with the object rendered in the 3D interface display module 104 through the application interaction module 102. As an example, the application interaction module 102 obtains operating information of the operating user, performs logical processing on a received rendering event (i.e., the operating information of the operating user) to generate a rendering instruction, and sends the rendering instruction to the system composition module 103. The system composition module 103 then renders the rendering objects of a plurality of applications according to the received rendering instructions and the view information of the operating user to obtain a rendered picture containing the rendering objects of the plurality of applications, and presents the rendered picture to the operating user through the 3D interface display module 104, thereby achieving an interaction effect between the operating user and the rendered objects.

Of course, the triggered rendering event parsed by the application interaction module 102 may alternatively be content generated within and by the application. The application performs logical processing based on its own content to generate a rendering instruction, and sends the rendering instruction to the system composition module 103. The system composition module 103 renders the rendering objects of a plurality of applications according to the received rendering instructions and the view information of the operating user, to obtain a rendered picture containing the rendering objects of the plurality of applications.

In embodiments of the present disclosure, data transmission between the application interaction module 102 and the system composition module 103 may also be accomplished via other data transmission modes, which are not limited in the embodiments of the present disclosure. In addition, it shall be noted that FIG. 1 only illustrates one scenario provided by the present disclosure, and in practice, other scenarios may also be included, which are not limited in the present disclosure.

In the prior art, each application renders its own rendering objects to obtain a rendered image, which is then sent to the system process for composition. Due to the high-resolution requirements of XR, the images rendered by the applications have a high resolution, occupying large storage space. This creates enormous transmission pressure for inter-process transmission of the high-resolution rendered images, and increases transmission latency.

To solve the problems existing in the prior art, the embodiments of the present disclosure provide a method for rendering 3D content in a multitasking system, where an application is responsible for generating a rendering instruction for a rendering object based on application logic, and sending the rendering instruction to a system, which then renders the rendering object according to the rendering instruction. FIG. 2 illustrates a flowchart of a method for rendering 3D content in a multitasking system according to an embodiment of the present disclosure. FIG. 2 depicts a process of rendering from an application to a system, but more or fewer operational steps may be included based on conventional or non-inventive efforts. The order of steps listed in the embodiment is merely one of various execution orders and does not represent the sole execution order. During actual implementation of a system or an apparatus product, the steps may be executed sequentially or in parallel in accordance with the method illustrated in the embodiments or the drawings. Specifically, as illustrated in FIG. 2, the method, which may be performed by an application, may include the following steps:
Step 201: generating a rendering instruction for a rendering object based on application logic, the rendering instruction being used to guide the generation of a rendered image of the rendering object; and
Step 202: sending the rendering instruction to a system, such that the system renders the rendering objects of a plurality of applications according to the received rendering instructions sent by the plurality of applications to obtain a rendered picture containing the rendering objects of the plurality of applications.

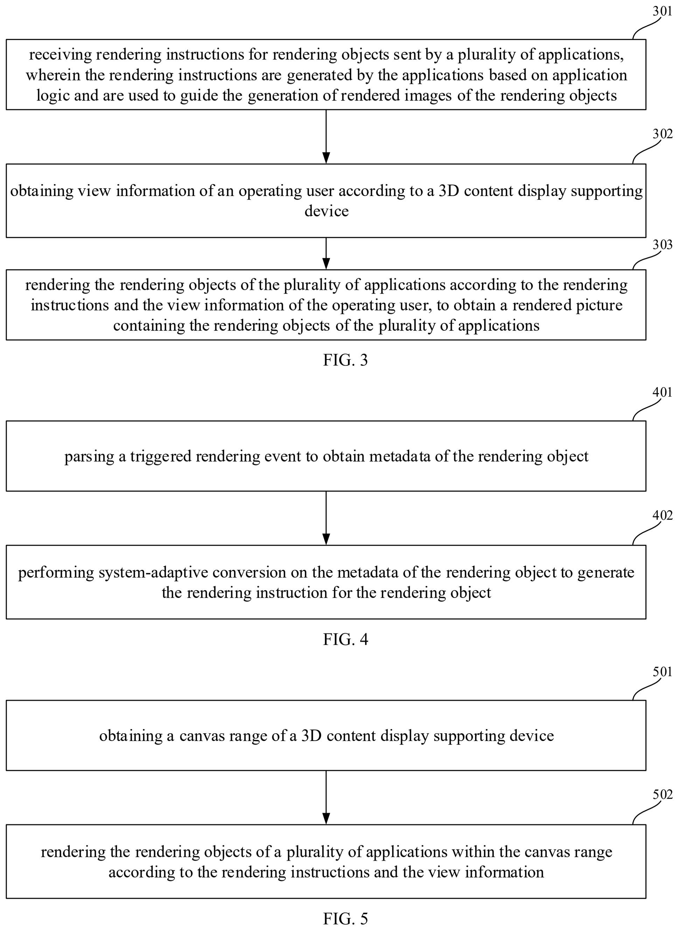

Correspondingly, embodiments of the present disclosure further provide a method for rendering 3D content in a multitasking system, and the method is performed by a system. As illustrated in FIG. 3, the method may include the following steps:
Step 301: receiving rendering instructions for rendering objects sent by a plurality of applications, the rendering instructions being generated by the applications based on application logic and being used to guide the generation of rendered images of the rendering objects;
Step 302: obtaining view information of an operating user according to a 3D content display supporting device;
Step 303: rendering the rendering objects of the plurality of applications according to the rendering instructions and the view information of the operating user, to obtain a rendered picture containing the rendering objects of the plurality of applications.

In the method according to the embodiments of the present disclosure, the applications generate the rendering instructions for the rendering objects based on the application logic and then send the rendering instructions to the system. Compared with the conventional method in which the applications render the rendering objects and send the generated rendered images to the system, the size of the rendering instructions sent by the application in the present disclosure is far smaller than that of the generated rendered images, thereby effectively reducing the pressure of data transmission between the application and the system and reducing the transmission latency. Finally, the system renders the rendering objects of a plurality of applications according to the received rendering instructions sent by the applications and the view information of the operating user to obtain a rendered picture. The present disclosure keeps the application logic to be executed in the applications and enables the system to perform rendering. Even if a certain application crashes due to a logic processing failure, it will not affect the operation of the system, and the rendering objects of other normally operating applications can still be rendered properly, which improves the overall stability of the system.

The application generates the rendering instruction based on the application logic. In the embodiments of the present disclosure, the rendering instructions is not a rendered image obtained by rendering the rendering object, but is used to guide the generation of the rendered image of the rendering object. The application sends the rendering instruction to the system, which means that the system generates a rendered image under the guidance of the rendering instruction. The rendering instruction refers to any instruction that can guide the system to control hardware for picture rendering. Of course, the rendering instruction may also include two parts: one part is any content that can be converted into a hardware instruction, and the other part is a hardware instruction. The hardware instruction controls the hardware to perform picture rendering. The type of the hardware instruction may be a GPU instruction, such as a GPU API including OpenGL/Vulkan/DirectX, etc. The present disclosure does not limit the specific form of the rendering instruction.

Certainly, the present disclosure also does not preclude the possibility of one or some applications directly sending rendered picture(s) (e.g., a picture that is relatively simple with a small memory usage, or is more suitable to be presented as a rendered picture) to the system. The system receives the rendering instructions and the rendered pictures sent by a plurality of applications, renders the rendering objects of the plurality of applications based on the rendering instructions, and simultaneously composes the received rendered pictures sent by the plurality of applications, so as to finally obtain a rendered picture containing the rendering objects of the plurality of applications.

In the embodiments of the present disclosure, the granularity of the rendering instruction may be set according to actual requirements, which is not limited in the present disclosure.

As illustrated in FIG. 4, the generating a rendering instruction for a rendering object based on application logic further includes:
Step 401: parsing a triggered rendering event to obtain metadata of the rendering object; and
Step 402: performing system-adaptive conversion on the metadata of the rendering object to generate the rendering instruction for the rendering object, such that the system renders the rendering objects of a plurality of applications according to the received rendering instructions sent by the plurality of applications.

In the embodiments of the present disclosure, the rendering event may include operating information of the operating user, and may also include content generated by the application based on the application logic. The metadata of the rendering object includes descriptive information and attribute information of the rendering object. The category of the descriptive information of the rendering object may be picture, video, text, model geometric information, material, texture, etc. The attribute information of the rendering object may be position, rotation, scaling, transparency, animation, visibility status, etc.

For example, when the object to be rendered is a "puppy", the application converts the metadata of the "puppy" rendering content (e.g., current state such as squatting, appearance, position, rotation, size, or other information) into corresponding rendering instruction and sends the rendering instruction to the system. The system renders the "puppy" at a specified position according to the received rendering instruction to obtain a rendered picture. Thus, a plurality of users can see a "puppy" squatting at a certain position in the environment.

The application may support the interaction between the operating user and the "puppy", such as the puppy lying down after the interaction. When the operating user interacts with the "puppy" (e.g., touching the "puppy"), the interactive operation of the operating user is sent to the application as a rendering event. The application parses the rendering event and obtains the corresponding metadata of the "puppy". Then, based on the internal logic of the application, it is determined that the "puppy" will lie down when touched. Therefore, the application converts the updated state of the "puppy" into a rendering instruction and sends the rendering instruction to the system, the system then renders the posture of the "puppy" after the touch operation according to the rendering instruction. Animation may also be supported between the two actions, and animation-related content (e.g., a motion model) may be notified to the system for rendering through a model rendering instruction.

The parsing of the triggered rendering event in Step 401 further include:
parsing a triggered rendering event by the application to create 3D content to be rendered. The 3D content may be directly generated by the application or created through file parsing.

The 3D content may be described by means of a conventional 3D model based on geometry, material, etc., and read from a 3D model file in a format such as FBX, OBJ, etc., or described in any other way such as NeRF. The file of the 3D content may also adopt any other self-defined file format. The application parses and converts the rendering event into the metadata of the rendering object, i.e., the descriptive information (e.g., model geometry information, text and material) and the attribute information (e.g., position, rotation and scaling) of the rendering object.

For example, the object to be rendered is a "puppy" with its own animation effect A. The operating user clicking or touching the "puppy" triggers another animation effect B. In this case, the animation effect B is the rendering event.

The application parses the triggered rendering event, creates the 3D content of the animation effect B to be rendered, and parses and converts the animation effect B into metadata, which includes not only the descriptive information (e.g., model geometry information and material) but also the attribute information (e.g., position, rotation and scaling) of the "puppy".

The performing system-adaptive conversion on the metadata of the rendering object to generate a rendering instruction for the rendering object in Step 402 further includes:
performing temporal serialization processing on the metadata of the rendering object to obtain frame metadata of the rendering object; and
generating a control instruction corresponding to the frame metadata of the rendering object based on rendering logic of the system.

In this case, the rendering instruction includes both the frame metadata of the rendering object and a control instruction corresponding to the frame metadata. Both the frame metadata and the control instruction are transmitted to the system, which performs rendering to obtain a rendered picture.

In the embodiments of the present disclosure, the rendering event includes the operating information of the operating user. The system renders the rendering objects of a plurality of applications according to the received rendering instructions sent by the plurality of applications, specifically including:
the system renders the rendering objects of a plurality of applications according to the received rendering instructions sent by the plurality of applications and view information of the operating user.

The metadata may also be a motion model of the rendering object. System-adaptive conversion is performed on the metadata of the rendering object to generate the rendering instruction for the rendering object. In this case, the rendering instruction may be a model rendering instruction, and the system may generate images of the rendering objects according to the received model rendering instructions sent by the plurality of applications.

In the embodiments of the present disclosure, the motion model of the rendering object is processed based on the application logic to generate a model rendering instruction for the rendering object, and the model rendering instruction is sent to the system, such that the system renders the rendering objects of the plurality of applications according to the model rendering instruction.

Similarly, the system may render the rendering objects of the plurality of applications according to the received model rendering instructions sent by the plurality of applications and the view information of the operating user.

In contrast, in the conventional method, each application has a corresponding canvas range, meaning the application can only render images within the specified canvas range. In other words, only the portion of the rendering object within the specified canvas range can be rendered, while the portion outside the canvas range cannot be rendered. Therefore, interaction effect between objects corresponding to different applications cannot be achieved, resulting in low flexibility in expression and interaction of the XR system and relatively monotonous user experience.

Compared with the conventional method where an application renders an image, the present disclosure eliminates, by means of transmitting rendering instructions, the limitation that the rendering object of the application can only be rendered within the canvas range of the application. Specifically, according to an embodiment of the present disclosure, as illustrated in FIG. 5, the step in which the system renders the rendering objects of a plurality of applications according to the received rendering instructions sent by the plurality of applications and the view information of the operating user further includes:
Step 501: obtaining a canvas range of a 3D content display supporting device; and
Step 502: rendering the rendering objects of a plurality of applications within the canvas range according to the rendering instructions and the view information.

In the embodiments of the present disclosure, the canvas range of the 3D content display supporting device represents the range of the entire display interface. The system may obtain the range of the entire display interface by invoking a system hardware interface, and then renders the metadata according to the attributes (i.e., attribute information) of the rendering objects specified by the operating user within the entire display interface. With the method of the present disclosure, the operating user can freely specify the attributes of the rendering objects in the display interface, enabling interaction between a plurality of rendering objects, thereby enriching the operating user's experience.

In the prior art, the application renders the rendering object. When compositing the rendered images sent by a plurality of applications, the system needs to calculate the occlusion relationship between the rendered images according to the attributes of the rendered images and the view of the operating user, and remove the occluded portion from each image. A 2D multitasking system can acquire the occlusion conditions because the view is fixed and all the pictures are complete rectangular areas. In contrast, the view of a 3D multitasking system changes every frame, and minor differences exist even if there is no active movement. In addition, the content of the picture of the 3D application is irregular and may contain a transparent area, resulting in complex occlusion conditions. Calculating such information frame by frame and transmitting it to the application incurs a considerable overhead, and the performance loss is even greater than rendering all content without considering occlusion. Therefore, the applications can only render the entire object, and perform redundant rendering of the portion that the system needs to remove during composition, which causes a waste of the calculation resources of the applications.

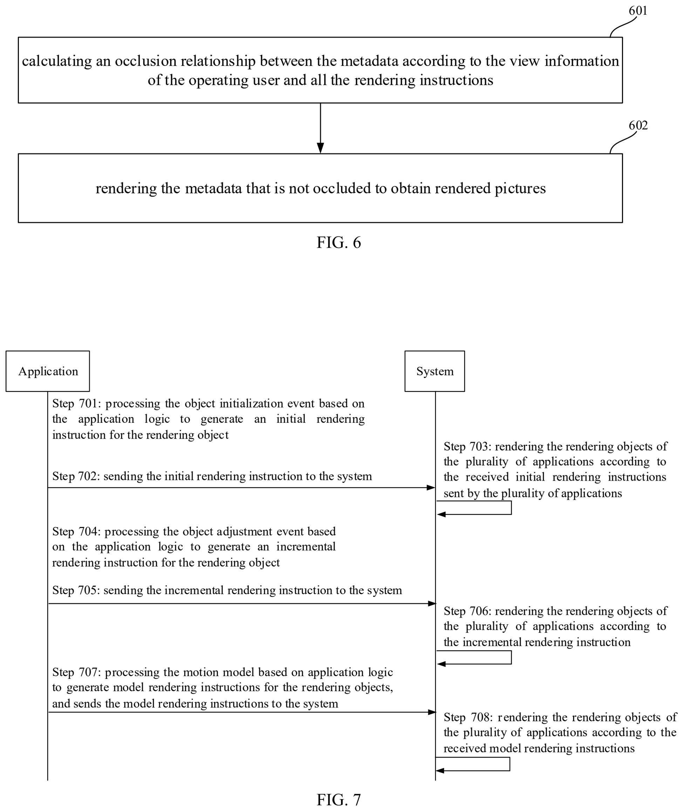

In the present disclosure, the applications no longer render the rendering objects, but sends the rendering instructions to the system, which performs rendering according to the received rendering instructions. Since the system obtains the rendering instructions, the system can calculate the occlusion relationship between the rendering objects according to the rendering instructions, and then only render the non-occluded metadata. Specifically, according to an embodiment of the present disclosure, as illustrated in FIG. 6, the step of rendering the rendering objects of the plurality of applications according to the rendering instructions and the view information of the operating user further includes:
Step 601: calculating an occlusion relationship between the metadata according to the view information of the operating user and all the rendering instructions; and
Step 602: rendering the metadata that is not occluded to obtain rendered pictures.

In the embodiments of the present disclosure, the step of calculating the occlusion relationship is a basic operation of graphics rendering, based on a depth detection, and its process has been encapsulated in a general-purpose API such as OpenGL and implemented at a GPU driver layer.

In the embodiments of the present disclosure, the transmission mode of the metadata of the rendered objects can provide the GPU with sufficient 3D scenario information to remove the occlusion. It can be understood that with the method illustrated in FIG. 6, the system calculates the occlusion relationship between the metadata and then renders only the non-occluded metadata, thereby reducing the calculation load of the rendering and saves the calculation resources.

In the prior art, since the system is only responsible for compositing the received rendered images and does not possess the metadata of the rendering object, if the shape, color, attributes, etc. of the rendering object change, the application needs to re-render the changed rendering object and send the re-rendered images to the system for composition. If the rendering object continuously moves and changes, the application needs to render the rendering object at each moment to generate the rendered images frame by frame, and then send the rendered image of each frame to the system in sequence. This method results in an excessive data transmission between the application and the system, and causes a significant transmission latency.

To solve the above problem, according to an embodiment of the present disclosure, the metadata of the rendering object further includes incremental information, and the rendering event includes an object initialization event and an object adjustment event.

As illustrated in FIG. 7, the method further includes:
Step 701: processing, by the application, the object initialization event based on the application logic to generate an initial rendering instruction for the rendering object;
Step 702: sending, by the application, the initial rendering instruction to the system;
Step 703: rendering, by the system, the rendering objects of the plurality of applications according to the received initial rendering instructions sent by the plurality of applications;
Step 704: processing, by the application, the object adjustment event based on the application logic to generate an incremental rendering instruction for the rendering object;
Step 705: sending, by the application, the incremental rendering instruction to the system; and
Step 706: rendering, by the system, the rendering objects of the plurality of applications according to the incremental rendering instruction.

In the embodiments of the present disclosure, the object initialization event and the object adjustment event may be initiated by the operating user or generated internally by the application. When the event is initiated by the operating user, the operating user first initializes the metadata of the rendering object, then the application processes the object initialization event based on the application logic to generate an initial rendering instruction for the rendering object, then the system renders the rendering object initialized by the operating user, and subsequently, the operating user may interact with the rendered object through an input device such as a handheld controller, i.e., initiating the rendered object adjustment event through the input device such as the handheld controller, so as to adjust the metadata of the object (e.g., text and material in the descriptive information, or position, rotation and scaling in the attribute information). The application processes the object adjustment event based on the application logic to generate an incremental rendering instruction for the rendering object, and the system performs rendering according to the incremental rendering instruction, thereby enabling interaction between the user and the rendered object.

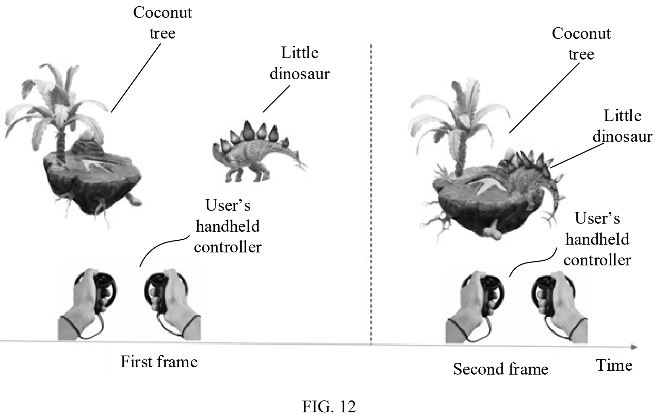

For example, as illustrated in FIG. 12:
the operating user launches Application A and performs the following object initialization operation to trigger the object initialization event: initializing the metadata (e.g., the color, the size, etc.) of a rendering object "little dinosaur" corresponding to Application A;
the operating user then launches Application B and performs the following object initialization operation to trigger the object initialization event: initializing the metadata (e.g., the size, etc.) of a rendering object "coconut tree" corresponding to Application B;
Application A parses the object initialization event upon receipt of it, to obtain the metadata (including the color, the size, etc. specified by the operating user) of the "little dinosaur"; then Application A performs system-adaptive conversion on the metadata of the "little dinosaur" to generate an initial rendering instruction for the "little dinosaur", and sends such initial rendering instruction to the system;
Application B parses the object initialization event upon receipt of it, to obtain the metadata (including the size, etc. specified by the operating user) of the "coconut tree"; then Application B performs system-adaptive conversion on the metadata of the "coconut tree" to generate an initial rendering instruction for the "coconut tree", and sends such initial rendering instruction to the system;
the system renders the "little dinosaur" according to the initial rendering instruction for the "little dinosaur", and renders the "coconut tree" according to the initial rendering instruction for the "coconut tree";
when the operating user wants to move the "little dinosaur" to the position under the "coconut tree", Application A parses the triggered object adjustment event to obtain the metadata of the "little dinosaur"; then Application A performs system-adaptive conversion on the metadata of the "little dinosaur" to generate an incremental rendering instruction for the "little dinosaur";
Application A sends the incremental rendering instruction for the "little dinosaur" to the system;
the system re-calculates the occlusion relationship between the "little dinosaur" and the "coconut tree" according to the incremental rendering instruction for the "little dinosaur", etc., and re-renders the "little dinosaur" and the "coconut tree".

According to the method illustrated in FIG. 7, in the present disclosure, after a rendering object is adjusted or changed, the application only needs to send the incremental rendering instruction for the rendering object to the system, thereby reducing the pressure of data transmission.

In some other embodiments of the present disclosure, after the user initializes the rendering object, there may be no need to adjust the rendering object for a period of time. The rendering object only needs to remain stationary or move regularly in accordance with the logic set by the application. In this case, to further reduce the volume of data transmission between the application and the system, the metadata of the rendering object further includes a motion model of the rendering object. With continued reference to FIG. 7, the method further includes the following steps:
Step 707: processing, by the application, the motion model based on application logic to generate model rendering instructions for the rendering objects, and sends the model rendering instructions to the system; and
Step 708: rendering, by the system, the rendering objects of the plurality of applications according to the received model rendering instructions.

For example, the application logic of Application A includes: rendering a "little dinosaur" which has its own animation effect; when a rendering event of an operating user clicking or touching the "little dinosaur" is received, another animation effect is triggered.

The application logic of Application B includes: rendering a "coconut tree" which has its own animation effect, such as a swaying-in-the-wind effect.

When being launched by the operating user, Application A generates a rendering instruction corresponding to the "little dinosaur" to describe the appearance of the "little dinosaur" (i.e., the metadata, such as size, rotation, position, animation, etc.), and sends the rendering instruction to the system.

When being launched by the operating user, Application B generates a rendering instruction corresponding to the "coconut tree" to describe the appearance of the "coconut tree" (i.e., the metadata, such as size, rotation, position, animation, etc.), and sends the rendering instruction to the system.

The system performs unified rendering and composition according to the rendering instructions from Application A and Application B.

When the operating user clicks on the "little dinosaur", Application A triggers the corresponding animation effect of the little dinosaur according to the application logic upon receipt of the rendering event, generates a corresponding incremental rendering instruction accordingly, and sends the incremental rendering instruction to the system.

When the operating user moves the "little dinosaur" to the position under the "coconut tree", an occlusion occurs between the "little dinosaur" and the "coconut tree". The system re-calculates the occlusion relationship between the "little dinosaur" and the "coconut tree" according to incremental information of the position change of the "little dinosaur", and re-renders the "little dinosaur" and the "coconut tree". At this time, the occluded portions are removed and do not need to be rendered, thereby saving the rendering resources.

When the "little dinosaur" is located between two leaves of the "coconut tree", the correct occlusion relationship may also be achieved according to the metadata. This scenario cannot be handled by the previous method where the applications send the rendered images, and can only achieve the effect of the "little dinosaur" completely occluding the "coconut tree" or the "coconut tree" completely occluding the "little dinosaur".

In the embodiments of the present disclosure, the motion model may define the motion rule of the rendering object. After sending the model rendering instruction to the system, the application may no longer need to parse the triggered rendering event or obtain the metadata of the rendering object. The system calculates the initial rendering instruction and the incremental rendering instruction for the rendering object in real time according to the model rendering instruction, and performs dynamic rendering of the rendering object in real time. thereby reducing the volume of data transmission between the application and the system. Since the system needs to perform data transmission with a plurality of applications through a same message transmission interface (e.g., IPC communication), the reduction of the volume of data transmission between the application and the system results in a significant improvement in the overall interactive communication efficiency.

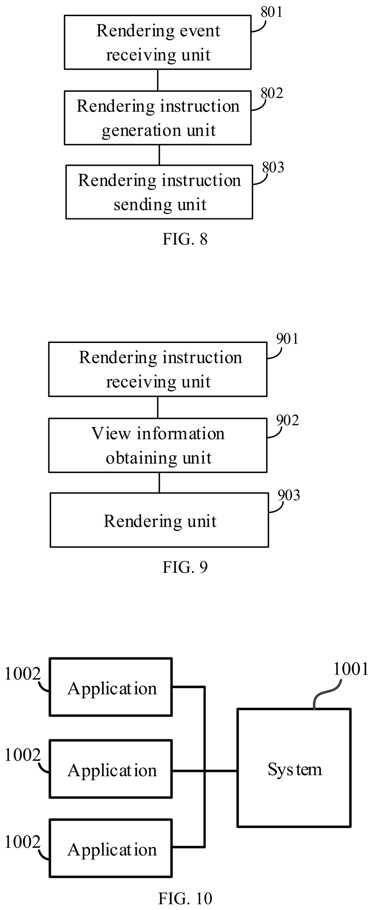

Based on the same inventive concept, embodiments of the present disclosure further provide an apparatus for rendering 3D content in a multitasking system as illustrated in FIG. 8, including:
a rendering event receiving unit 801 configured to receive a triggered rendering event;
a rendering instruction generation unit 802 configured to generate a rendering instruction for a rendering object based on application logic, in which the rendering instruction is used to guide the generation of a rendered image of the rendering object; and
a rendering instruction sending unit 803 configured to send the rendering instruction to a system, such that the system renders the rendering objects of a plurality of applications according to the received rendering instructions sent by the plurality of applications to obtain a rendered picture containing the rendering objects.

Correspondingly, embodiments of the present disclosure further provide an apparatus for rendering 3D content in a multitasking system as illustrated in FIG. 9, including:
a rendering instruction receiving unit 901 configured to receive rendering instructions of rendering objects sent by a plurality of applications, in which the rendering instructions are generated by the applications based on application logic to guide the generation of rendered images of the rendering objects;
a view information obtaining unit 902 configured to obtain view information of an operating user according to a 3D content display supporting device; and
a rendering unit 903 configured to render the rendering objects of a plurality of applications according to the rendering instructions and the view information of the operating user to obtain a rendered picture containing the rendering objects.

Further, embodiments of the present disclosure further provide a rendering system for rendering 3D content in a multitasking system as illustrated in FIG. 10, including a system 1001 and a plurality of applications 1002.

During rendering, any of the application 1002implements the method performed by the application as described above.

During rendering, the system 1001 implements the method performed by the system as described above.

The advantageous effects achieved by the afore-mentioned apparatus and system are consistent with those achieved by the afore-mentioned method, and will not be repeated in the embodiments of the present disclosure.

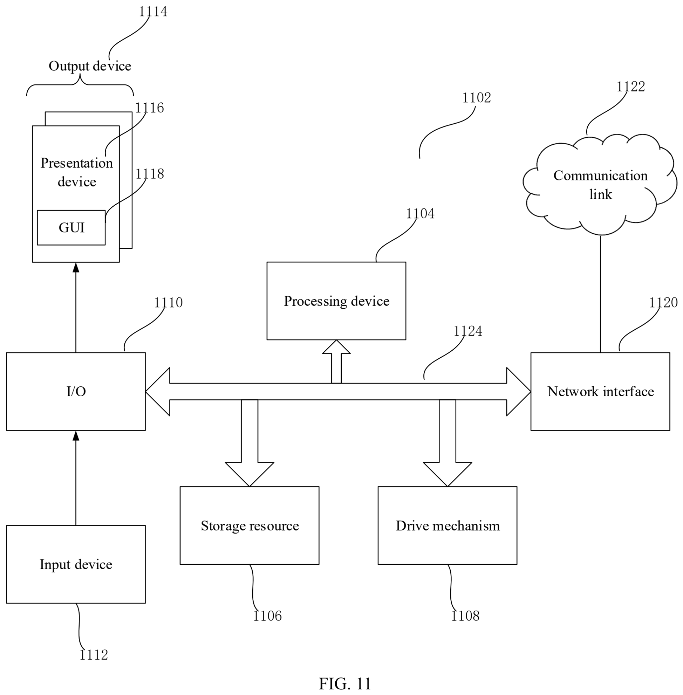

FIG. 11 illustrates a structural diagram of a computer device according to embodiments of the present disclosure. The apparatus in the present disclosure may be the computer device in the embodiments, which performs the method of the present disclosure as described above. The computer device 1102 may include one or more processing devices 1104, such as one or more central processing units (CPUs), each of which can implement one or more hardware threads. The computer device 1102 may further include any storage resource 1106 to store any type of information such as codes, settings, data, etc. Without limitation, for example, the storage resource 1106 may include any one or combinations of any type of Random-access Memory (RAM), any type of Read-Only Memory (ROM), a flash memory device, a hard disk, an optical disk, etc. More generally, any storage resource may store information using any technology. Further, any memory may provide a volatile or nonvolatile retention of information. Further, any storage resource may provide volatile or non-volatile retention of information. Further, any storage resource may represent a fixed or removable component of the computer device 1102. In a case where the processing device 1104 executes associated instructions stored in any storage resource or combination of storage resources, the computer device 1102 may perform any operation of the associated instructions. The computer device 1102 further includes one or more drive mechanisms 1108 (e.g., a hard disk drive mechanism, an optical disk drive mechanism, etc.) for interacting with any storage resource.

The computer device 1102 may further include an Input/Output (I/O) module 1110 configured to receive various inputs (via an input device 1112) and to provide various outputs (via an output device 1114). A specific output mechanism may include a presentation device 1116 and an associated graphical user interface (GUI) 1118. In other embodiments, the Input/Output (I/O) module 1110, the input device 1112, and the output device 1114 may be omitted, and the computer device 1102 may only serve as a computer device in a network. The computer device 1102 may further include one or more network interfaces 1120 configured to exchange data with other devices via one or more communication links 1122. One or more communication buses 1124 couple the components described above together.

The communication link 1122 may be implemented in any manner, for example, by a local area network, a wide area network (e.g., the Internet), a point-to-point connection, etc., or any combination thereof. The communication link 1122 may include any combination of a hardwired link, a wireless link, a router, a gateway function, a name server, etc. governed by any protocol or combination of protocols.

Embodiments of the present disclosure further provide a computer-readable storage medium storing a computer program. The computer program, when executed by a processor, implements the afore-mentioned method.

Embodiments of the present disclosure further provide a computer-readable instruction. When the instruction is executed by a processor, a program in the instruction enables the processor to perform the afore-mentioned method.

It should be understood that in various embodiments of the present disclosure, the sequence numbers of the above processes do not indicate the order of execution. The order of execution of each process shall be determined by the function and internal logic thereof, and shall not constitute any limitation to the implementation process of the embodiments of the present disclosure.

## Claims

1. A method for rendering three-dimensional (3D) content in a multitasking system, wherein the method is applied to the multitasking system of a 3D content display supporting device and performed by an application in the multitasking system of the 3D content display supporting device, the method comprising:
generating a rendering instruction for a rendering object based on application logic, wherein the rendering instruction is used to guide the generation of a rendered image of the rendering object; and
sending the rendering instruction to a system, such that the system renders the rendering objects of a plurality of applications according to the received rendering instructions sent by the plurality of applications to obtain a rendered picture containing the rendering objects of the plurality of applications.

2. The method according to claim 1, wherein the generating a rendering instruction for a rendering object based on application logic further comprises:
parsing a triggered rendering event to obtain metadata of the rendering object, wherein the metadata of the rendering object comprises descriptive information and attribute information of the rendering object; and
performing system-adaptive conversion on the metadata of the rendering object to generate the rendering instruction for the rendering object.

3. The method according to claim 2, wherein the rendering event comprises operation information of an operating user;
the system renders the rendering objects of a plurality of applications according to the received rendering instructions sent by the plurality of applications, specifically comprising:
the system renders, by the rendering objects of a plurality of applications according to the received rendering instructions sent by the plurality of applications and view information of the operating user.

4. The method according to claim 2, wherein the metadata of the rendering object further comprises incremental information, and the rendering event comprises an object initialization event and an object adjustment event;
the method further comprises:
processing the object initialization event based on the application logic to generate an initial rendering instruction for the rendering object, and sending the initial rendering instruction to the system, so that the system renders the rendering objects of the plurality of applications according to the received initial rendering instructions sent by the plurality of applications; and
processing the object adjustment event based on the application logic to generate an incremental rendering instruction for the rendering object, and sending the incremental rendering instruction to the system, such that the system renders the rendering objects of the plurality of applications according to the incremental rendering instruction.

5. The method according to claim 2, wherein the metadata of the rendering object further comprises a motion model of the rendering object;
the method further comprises:
processing the motion model of the rendering object based on the application logic to generate a model rendering instruction for the rendering object, and sending the model rendering instruction to the system, such that the system renders the rendering objects of the plurality of applications according to the model rendering instruction.

6. A method for rendering three-dimensional (3D) content in a multitasking system, wherein the method is applied to the multitasking system of a 3D content display supporting device and performed by a system in the multitasking system of the 3D content display supporting device, the method comprising:
receiving rendering instructions for rendering objects sent by a plurality of applications, wherein the rendering instructions are generated by the applications based on application logic and are used to guide the generation of rendered images of the rendering objects;
obtaining view information of an operating user according to the 3D content display supporting device; and
rendering the rendering objects of the plurality of applications according to the rendering instructions and the view information of the operating user, to obtain a rendered picture containing the rendering objects of the plurality of applications.

7. The method according to claim 6, wherein the rendering instructions are generated by the applications based on application logic, comprising:
parsing, by the applications, a triggered rendering event to obtain metadata of the rendering objects, wherein the rendering event comprises operating information of an operating user, and the metadata comprises descriptive information and attribute information of the rendering objects; and
performing system-adaptive conversion on the metadata of the rendering objects to generate the rendering instructions for the rendering objects.

8. The method according to claim 7, wherein the metadata of the rendering objects further comprises incremental information, the rendering event comprises an object initialization event and an object adjustment event, an initial rendering instruction is generated by the application processing the object initialization event based on the application logic, and an incremental rendering instruction is generated by the application processing the object adjustment event based on the application logic;
the method further comprises:
rendering the rendering objects of the plurality of applications according to the received initial rendering instructions sent by the applications and the view information of the operating user; and
rendering the rendering objects of the plurality of applications according to the received incremental rendering instructions sent by the applications and the view information of the operating user.

9. The method according to claim 7, wherein the metadata of the rendering object further comprises a motion model of the rendering object, and a model rendering instruction is generated by the application processing the motion model of the rendering object based on the application logic;
the method further comprises:
rendering the rendering objects of the plurality of applications according to the received model rendering instructions sent by the applications and the view information of the operating user.

10. The method according to claim 6, wherein rendering the rendering objects of the plurality of applications according to the rendering instructions and the view information of the operating user further comprises:
obtaining a canvas range of the 3D content display device; and
rendering the rendering objects of the plurality of applications within the canvas range according to the rendering instructions and the view information.

11. The method according to claim 7, wherein rendering the rendering objects of the plurality of applications according to the rendering instructions and the view information of the operating user further comprises:
calculating an occlusion relationship between the metadata according to the view information of the operating user and all the rendering instructions; and
rendering the metadata that is not occluded to obtain the rendered picture.

12. A computer device, comprising a memory, a processor, and a computer program stored in the memory and executable on the processor, wherein the processor is configured to execute the computer program to implement the method according to any one of claims 1 to 11.
